# EUROPÄISCHE PATENTSCHRIFT

(11) **EP 1 444 083 B1**
(45) Veröffentlichungstag und Bekanntmachung des Hinweises auf die Patenterteilung: **08.08.2012**
(21) Anmeldenummer: 02767443.1
(22) Anmeldetag: 28.08.2002
(51) Int. Cl.: B29C 45/54, B29C 45/74, B29C 45/78

(54) **SPRITZGIESSMASCHINE ZUR HERSTELLUNG VON ELASTOMER- UND DUROMERFORMTEILEN**
INJECTION MOLDING MACHINE FOR THE PRODUCTION OF ELASTOMER AND DUROMER MOLDED ITEMS
MACHINE DE MOULAGE PAR INJECTION DESTINES A LA FABRICATION DE CORPS MOULES EN ELASTOMERE ET DUROMERE

(30) Priorität: 07.11.2001 DE 10154676
(43) Veröffentlichungstag der Anmeldung: 11.08.2004
(73) Patentinhaber: Carl Freudenberg KG, 69469 Weinheim (DE); Landshuter Werkzeugbau Alfred Steinl GmbH & Co. KG, 84032 Altdorf (DE)
(72) Erfinder: MALIG, Christoph, 69469 Weinheim (DE); EPING, Udo, 64295 Darmstadt (DE); SCHROIFF, Volker, 69502 Hemsbach (DE); GROSS, Heinz, 79395 Neuenburg (DE); STEINL, Peter, 84036 Landshut (DE)
(86) Internationale Anmeldenummer: PCT/EP2002/009565
(87) Internationale Veröffentlichungsnummer: WO 2003/039837

(56) Entgegenhaltungen:
- EP-A- 0 287 001
- EP-A- 0 391 323
- EP-A- 0 824 057
- EP-A- 0 860 263
- DE-C- 693 035
- DE-C- 3 320 520
- FR-A- 723 465
- FR-A- 2 297 132
- GB-A- 533 685
- GB-A- 1 019 557

## Beschreibung

### Technisches Gebiet

Die Erfindung betrifft eine Spritzgießmaschine für Elastomer- und Duromerformteile mit Befüllungsaggregat und mit jeweils gesondert temperierbarem Spritzaggregat und Vernetzungswerkzeug.

Spritzgießmaschinen sind weit verbreitet. Um eine gute Ausnutzung der Maschinen zu erreichen, werden möglichst kurze Vulkanisationszeiten angestrebt. Die Vulkanisationszeit von Bauteilen mit Wanddicken von 1 cm beträgt mehrere Minuten.

### Stand der Technik

Um die Vulkanisationszeit herabzusetzen, ist durch die US Patentschrift 4, 370,115 eine Spritzgießmaschine bekannt geworden, bei der zwischen dem Befüllungsaggregat und dem Vernetzungswerkzeug eine periodisch arbeitende Heizeinrichtung eingesetzt wird, in der ein Teil des vom Befüllungsaggregat eingepressten Elastomers auf eine Temperatur beheizt wird, die etwa der Vernetzungstemperatur im Vernetzungswerkzeug entspricht. Der Vernetzungsvorgang wird bei jedem Spritzvorgang wiederholt. Es findet hier eine Art Vorvernetzung des Elastomers statt, so dass die endgültige Vernetzung im Vernetzungswerkzeug zeitlich sehr gekürzt wird. Eine solche Vorrichtung hat jedoch den Nachteil, dass es in der Heizzone zu Aushärtungen kommen kann, welche den Spritzvorgang behindern. Bei den üblichen Spritzgießmaschinen zur Herstellung von Elastomer- und Duromerformteilen wird die Formmasse im Befüllungsaggregat bei einer für die Vernetzungsreaktion unkritischen Temperatur zumeist zwischen 70° und 90° Celsius plastifiziert. Erst nach dem Einspritzen in das Vernetzungswerkzeug, das auf die Vernetzungstemperatur vorgeheizt ist, beginnt die Vernetzungsreaktion. Die Vernetzung erreicht ihre maximale Geschwindigkeit wenn die Formmasse die Vernetzungstemperatur erreicht hat. Durch die geringe Wärmeleitfähigkeit von vernetzenden Formmassen wird die Zykluszeit des einzelnen Spritzvorgangs wesentlich von der Vernetzungszeit bestimmt. Die Dauer des Wärmetransports von der Werkzeugwand ins Innere des Formteils zur Erreichung der maximalen Vernetzungsgeschwindigkeit ist dabei ausschlaggebend.

Die GB 1 019 557 A beschreibt eine Spritzgießmaschine zur Herstellung von Gummiartikeln, bei der das Spritzaggregat einen beheizten Ringzylinder aufweist. Eine Kontrolle des Temperaturverlaufs über den gesamten Spritzprozess findet jedoch nicht statt.

Bei der Spritzgießmaschine nach der FR 2 297 132 A findet eine Temperaturkontrolle statt, indem der Ringzylinder beheizt wird. Aber auch hier wird die für eine Vernetzung des Elastomers unkritische Temperaturvorwärmung nicht berücksichtigt. In ähnlicher Weise wird bei der FR 723 465 A, der DE 693 035 C und der DE 33 20 520 C vorgegangen.

Schließlich sind noch die Druckschriften EP 0 287 001 A, EP 0 860 263 A, EP 0 824 057 A, EP 0 391 323 und GB 533 685 A zu nennen, welche sich mit Spritzgießmaschinen befassen.

### Darstellung der Erfindung

Der Erfindung liegt die Aufgabe zugrunde, eine Spritzgießmaschine, wie sie insbesondere in der GB 1 019 557 A dargestellt ist, weiterzuentwickeln um ihre Produktivität zu erhöhen. Die Vernetzungszeit im Vernetzungswerkzeug von insbesondere dickwandigen Formteilen soll deutlich reduziert werden. Außerdem soll das Formteil eine gleichmäßigere Vernetzungsstruktur aufweisen.

Die gestellte Aufgabe wird mit den Merkmalen des Anspruchs 1 gelöst. Die Unteransprüche 2 bis 4 stellen vorteilhafte Ausgestaltungen des Erfindungsgedankens dar.

Gemäß der Erfindung wird das Spritzaggregat selbst auf eine geringfügig unterhalb der Vernetzungstemperatur liegende Temperatur beheizt. In Versuchen zeigte sich, dass durch diese Maßnahme die Vulkanisationszeit ganz erheblich herabgesetzt wird. Die Verweilzeit des Elastomers im Spritzaggregat wird bevorzugt auf ein Minimum reduziert. Zusätzliche Teile an der Spritzgießmaschine wie beispielsweise die o.g. besondere Heizstrecke sind nicht erforderlich.

Die Spritzgießmaschine ist in bekannter Weise mit einem Befüllungsaggregat, einem Spritzaggregat und einem Vernetzungswerkzeug versehen, die gesondert beheizbar sind. Um eine möglichst kurze Verweilzeit der Formmassen nach Verlassen des Befüllungsaggregats zu erreichen, wird das Spritzaggregat mit einem Ringzylinder mit Ringkolben versehen. Die Beheizung des Ringzylinders und des Zylinderkerns kann durch entsprechend ausgestaltete Heizelemente erfolgen. Diese Heizelemente können gleichzeitig und synchron geregelt werden. Der Vorteil der Vorwärmung der Formmassen im Einspritzaggregat liegt darin, dass unmittelbar nach vollständiger Befüllung der Kavität im Vernetzungswerkzeug die Vernetzung mit maximaler Geschwindigkeit beginnt. Trotz der schlechten Wärmeleiteigenschaften der zu vernetzenden Formmassen wird eine weitgehend homogene Temperaturverteilung über den gesamten Querschnitt erreicht

Dieses wiederum hat eine weitgehend gleichmäßige Vernetzungsstruktur über die gesamte Bauteildicke zur Folge, da die Vernetzungsreaktionen in allen Bereichen des auf nahezu Vernetzungstemperatur vorgeheizten Werkstoffs innerhalb der Kavität annähernd gleichzeitig mit maximaler Geschwindigkeit einsetzt. Hierdurch wird eine hohe Qualität der Elastomerformteile bei verkürzter Zykluszeit bei der Herstellung der Teile erreicht. Bevorzugt wird der Zylinderraum auf mindestens 90% der Vernetzungstemperatur erwärmt. Sehr günstige Ergebnisse werden erreicht, wenn die Erwärmung bis auf 95 bis 98% der Vernetzungstemperatur durchgeführt wird. In der Regel wird das Volumen des im Zylinderraum enthaltenen und auf nahezu Vernetzungstemperatur erwärmten Formmasse so gewählt, dass es dem Volumen der Werkzeugkavität entspricht. Ein vollständiger Austausch der Formmasse im Zylinderraum ist dadurch sichergestellt. Der Kolbenringraum ist auf seiner Unterseite durch einen Schieber abschließbar. Durch eine entsprechende Ausbildung des Kolbenhubs kann das Volumen für einzelne Spritzvorgänge variiert werden.

### Kurzbeschreibung der Zeichnung

Anhand der beigefügten Zeichnung wird die Erfindung nachstehend erläutert. Es zeigt in schematischer Darstellung:
Fig. 1 eine Spritzgießmaschine während der Befüllung.
Fig 2 die Spritzgießmaschine schematisch nach der Befüllung.
Fig. 3 die Spritzgießmaschine vorbereitet für den Spritzvorgang und
Fig. 4 die Spritzgießmaschine nach Durchführung des Spritzvorgangs.

### Ausführung der Erfindung

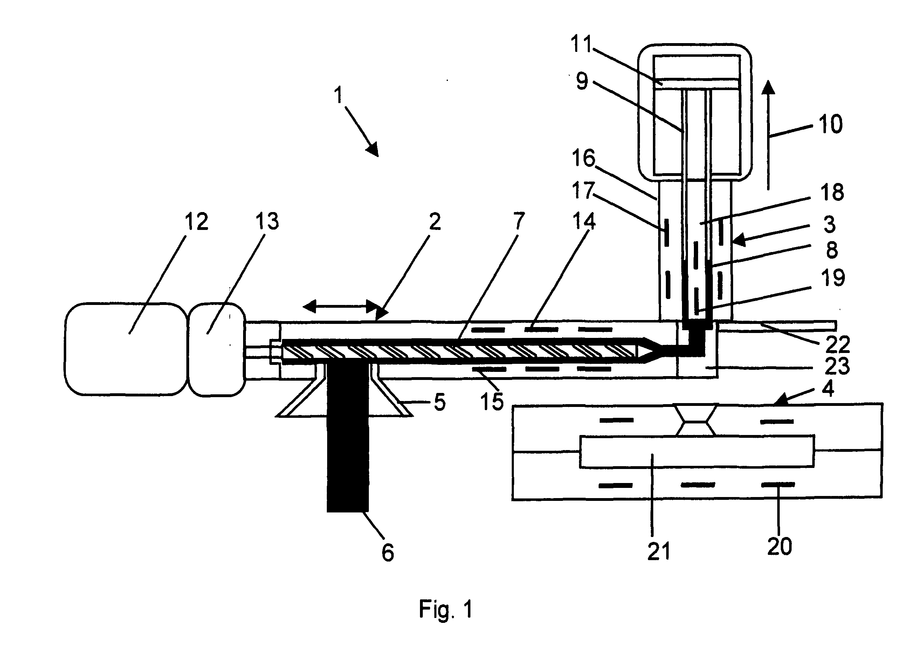

In der Figur 1 ist schematisch eine Spritzgießmaschine 1 dargestellt, die aus dem Befüllungsaggregat 2, dem Spritzaggregat 3 und dem Vernetzungswerkzeug 4 besteht. Die Spritzgießmaschine 1 ist während des Befüllungsvorgangs dargestellt. Die in den Einzugsbereich 5 eingeführte Formmasse 6 wird von der Schnecke 7 und Kolben des Befüllungsaggregats 2 in den Ringraum 8 des Spritzaggregats 3 gefördert. Der Ringkolben 9 bewegt sich dabei, wie mit dem Pfeil 10 angedeutet, nach oben. Am oberen Ende des Ringkolbens 9 ist der Druckkolben 11 angebracht, der für den Einspritzvorgang benötigt wird. Die Schnecke 7 wird durch den Motor 12 unter Zwischenschaltung des Getriebes 13 angetrieben. Das Schneckengehäuse 14 ist mit der gesonderten Temperierung 15 versehen. Der Ringzylinder 16 ist mit der Temperierung 17 ausgestattet. Bevorzugt ist auch der Zylinderkern 18 mit der Temperierung 19 versehen. Das unterhalb des Spritzaggregats 3 befindliche Vernetzungswerkzeug 4 ist mit einer eigenen Heizung 20 versehen. Die Volumina der Werkzeugkavität 21 und des Kolbenringraums 8 sind so aufeinander abgestimmt, dass eine Füllung des Kolbenringraums 8 einer Füllung der Werkzeugkavität 21 entspricht. Ein Schieber 22 an der Unterseite des Kolbenringraums 8 dient zum Abschluß des Kolbenringraums 8 nach Befüllung.

Die Bezugsziffern in den nachfolgenden Figuren entsprechen den in der Figur 1 beschriebenen Teile.

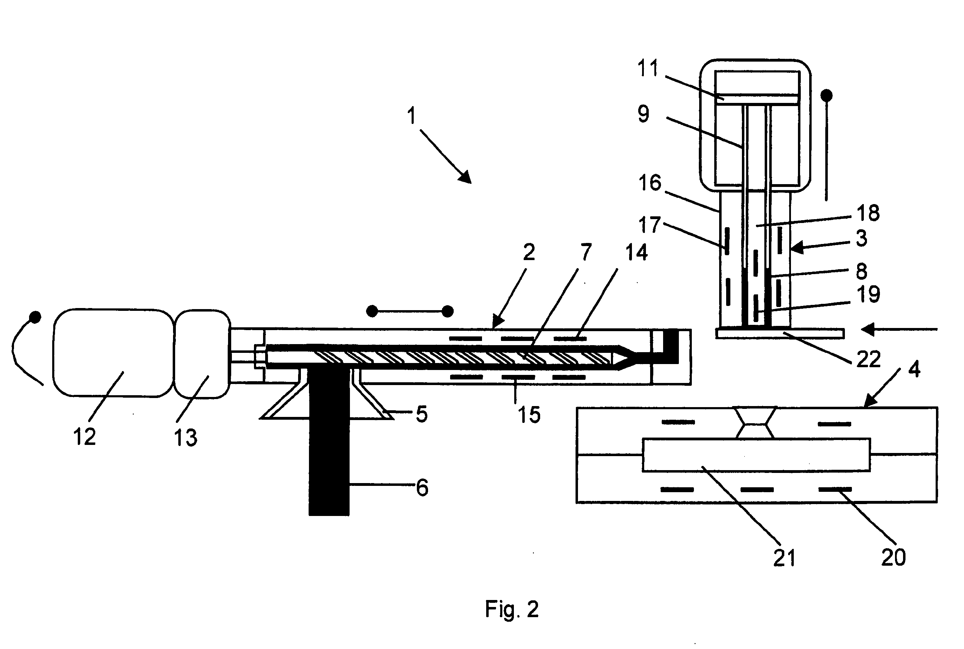

In der Figur 2 ist die Befüllung des Kolbenringraums 8 abgeschlossen. Die Schnecke 7 befindet sich imStillstand. Der Schieber 22 hat den Kolbenringraum 8 abgeschlossen. Wie in der Fig. 1 beträgt die Temperatur am Befüllungsaggregat ca. 80° Celsius, die Temperatur am Spritzaggregat 3 ca. 165 ° Celsius und die Temperatur am Vernetzungswerkzeug ca. 180 ° Celsius.

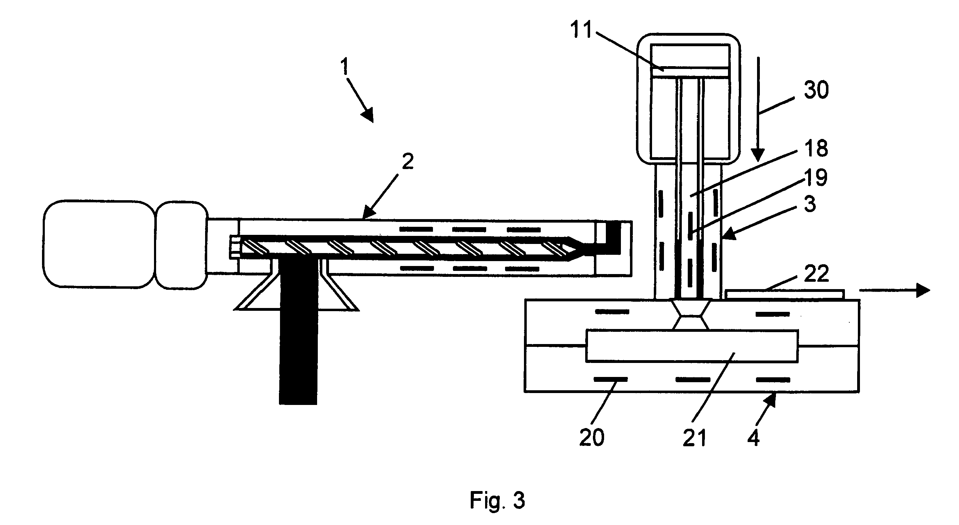

In der Figur 3 ist das Spritzaggregat 3 mit dem Vernetzungswerkzeug 4 verbunden und der Schieber 22 geöffnet. Das Befüllungsaggregat 2 befindet sich weiterhin in Ruhestellung. Das Spritzaggregat 3 beginnt den Einspritzvorgang, was mit dem Pfeil 20 angezeigt ist. Die eingestellten Temperaturen an allen 3 Maschinenteilen sind beibehalten.

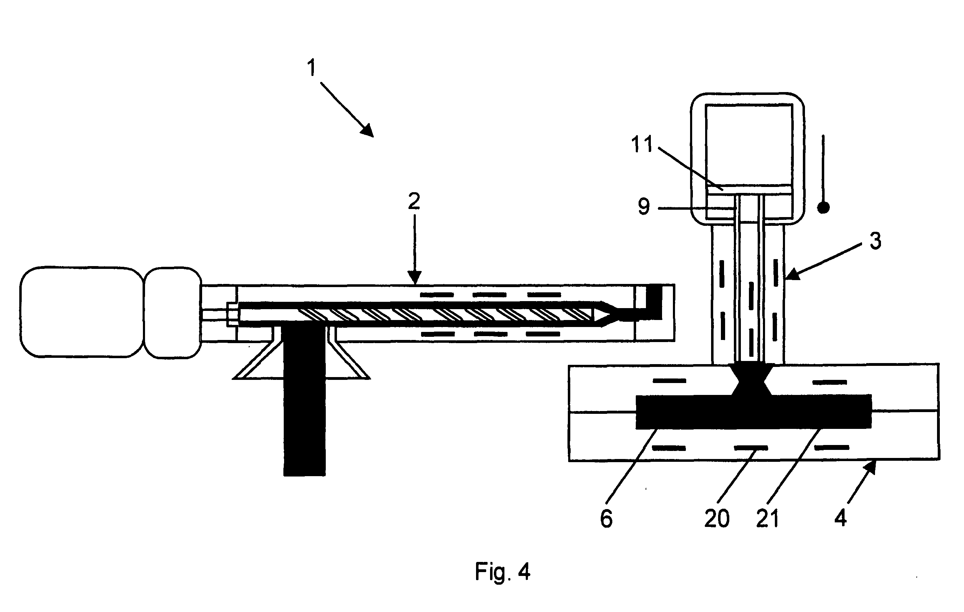

Die Figur 4 zeigt das Ende des Spritzvorgangs. Der Ringkolben 9 ist mit seinem unteren Ende am Anschlag angelangt und die Formmasse 6 ist aus dem Kolbenringraum 8 in die Kavität 21 des Vemetzungswerkzeugs 4 gedrückt worden. Hiermit ist ein Zyklus des Spritzvorgangs beendet und der Vorgang kann bei der Zusammenstellung der Teile nach Fig. 1 erneut beginnen.

## Patentansprüche

1. Spritzgießmaschine (1) für Elastomer- und Duromerformteile mit Befüllungsaggregat (2) und mit jeweils gesondert temperierbarem Spritzaggregat (3) und Vernetzungswerkzeug (4), **dadurch gekennzeichnet, dass** das Befüllungsaggregat (2) ein mit einer gesonderten Temperierung (15) versehenes Schneckengehäuse (14) mit Schnecke (7) und Kolben hat, durch welche der zu verarbeitende Kunststoff auf eine für die Vernetzungsreaktion unkritische Temperatur erwärmbar ist, und dass das Spritzaggregat (3) aus Ringzylinder (16) mit Ringkolben (9) und Zylinderkern (18) besteht, wobei Ringzylinder (16) und Zylinderkern (19) mit Heizelementen (17, 19) versehen sind, über welche der Kunststoff auf eine geringfügig unterhalb der Vernetzungstemperatur der eingesetzten Formmasse liegende Temperatur beheizbar ist.

2. Spritzgießmaschine nach Anspruch 1, **dadurch gekennzeichnet, dass** die Heizelemente (17,19) des Ringzylinders (16) und des Zylinderkerns (18) gleichzeitig und synchron regelbar sind.

3. Spritzgießmaschine nach einem der Ansprüche 1 oder 2, **dadurch gekennzeichnet, dass** das Volumen der im Kolbenringraum (8) enthaltenen, auf nahezu Vernetzungstemperatur erwärmten vernetzenden Formmasse (6) dem Volumen der Werkzeugkavität (21) entspricht.

4. Spritzgießmaschine nach einem der Ansprüche 1 bis 3, **dadurch gekennzeichnet, dass** der Kolbenringraum (8) auf der Unterseite durch einen Schieber (22) abschließbar ist.

## Claims

1. Injection-moulding machine (1) for elastomer and thermoset mouldings, comprising a filling unit (2) and comprising an injection unit (3) and a crosslinking mould (4), the temperature of each of which can be separately controlled, **characterized in that** the filling unit (2) has a screw housing (14), which is provided with a separate temperature control (15) and has a screw (7) and a ram, by which the polymer to be processed can be heated to a temperature that is uncritical for the crosslinking reaction, and **in that** the injection unit (3) consists of a tubular cylinder (16) with a tubular ram (9) and a cylinder core (18), the tubular cylinder (16) and the cylinder core (18) being provided with heating elements (17, 19), by way of which the polymer can be heated to a temperature lying slightly below the crosslinking temperature of the moulding compound that is used.

2. Injection-moulding machine according to Claim 1, **characterized in that** the heating elements (17, 19) of the tubular cylinder (16) and of the cylinder core (18) can be controlled simultaneously and synchronously.

3. Injection-moulding machine according to either of Claims 1 and 2, **characterized in that** the volume of the crosslinking moulding compound (6) contained in the annular space (8) of the ram and heated almost to the crosslinking temperature corresponds to the volume of the mould cavity (21).

4. Injection-moulding machine according to one of Claims 1 to 3, **characterized in that** the annular space (8) of the ram can be closed off on the underside by a slide (22).

## Revendications

1. Machine de moulage par injection (1) pour des pièces moulées en élastomère et en duromère, comprenant une unité de remplissage (2) et une unité d'injection (3) pouvant être équilibrée en température à chaque fois de manière séparée ainsi qu'un outil de réticulation (4), **caractérisée en ce que** l'unité de remplissage (2) présente un boîtier de vis sans fin (14) pourvu d'un équilibrage en température séparé (15), avec une vis sans fin (7) et un piston, par le biais desquels le plastique à traiter peut être réchauffé à une température non critique pour la réaction de réticulation, et **en ce que** l'unité d'injection (3) se compose d'un cylindre annulaire (16) avec un piston annulaire (9) et d'un noyau de cylindre (18), le cylindre annulaire (16) et le noyau de cylindre (18) étant pourvus d'éléments chauffants (17, 19) par le biais desquels le plastique peut être chauffé à une température légèrement en dessous de la température de réticulation de la composition de moulage utilisée.

2. Machine de moulage par injection selon la revendication 1, **caractérisée en ce que** les éléments chauffants (17, 19) du cylindre annulaire (16) et du noyau de cylindre (18) peuvent être réglés simultanément et de manière synchrone.

3. Machine de moulage par injection selon l'une quelconque des revendications 1 ou 2, **caractérisée en ce que** le volume de la composition de moulage (6) contenue dans l'espace annulaire du piston (8), réticulant et réchauffée à pratiquement la température de réticulation, correspond au volume de la cavité de l'outil (21).

4. Machine de moulage par injection selon l'une quelconque des revendications 1 à 3, **caractérisée en ce que** l'espace annulaire de piston (8) peut être bouché sur le côté inférieur par un coulisseau (22).
